# EUROPÄISCHE PATENTANMELDUNG

(11) **EP 3 561 909 A1**
(43) Veröffentlichungstag der Anmeldung: **30.10.2019**
(21) Anmeldenummer: 19171033.4
(22) Anmeldetag: 25.04.2019
(51) Int. Cl.: H01M 2/20, H01M 4/66, H01M 4/74, H01M 4/80, H01M 10/0525, H01M 2/16, H01M 4/133, H01M 4/525, H01M 10/0585

(54) **STRUKTURBAUTEIL MIT EINEM INTEGRIERTEN BATTERIEAUFBAU**

(30) Priorität: 27.04.2018 DE 102018110164
(71) Anmelder: Airbus Operations GmbH, 21129 Hamburg (DE)
(72) Erfinder: Karch, Christian, 85579 Neubiberg (DE); Linde, Peter, 21129 Hamburg (DE)
(74) Vertreter: LKGLOBAL Lorenz & Kopf PartG mbB Patentanwälte

(57) **Zusammenfassung**

Ein Strukturbauteil für ein Fahrzeug weist einen Batterieaufbau mit einem Festelektrolyten-Matrixmaterial, einer darin eingebetteten ersten Schicht Kohlefasern mit einer kathodenaktiven Beschichtung, einer darin eingebetteten zweiten Schicht Kohlefasern ohne kathodenaktive Beschichtung und mindestens einer dazwischen angeordneten elektrisch isolierenden Trennschicht auf. Ferner weist das Strukturbauteil eine erste Kollektorschicht und eine zweite Kollektorschicht auf, welche auf der ersten Schicht bzw. der zweiten Schicht an einer von der Trennschicht abgewandten Seite angeordnet sind, wobei die erste Kollektorschicht und die zweite Kollektorschicht jeweils aus einer flexiblen, formbaren und porösen Schicht von Kohlenstoff-Allotropen ausgebildet sind.

## Beschreibung

### TECHNISCHES GEBIET

Die Erfindung betrifft ein Strukturbauteil für ein Fahrzeug, ein Verfahren zum Herstellen eines Strukturbauteils sowie ein Fahrzeug mit mindestens einem solchen Strukturbauteil.

### HINTERGRUND DER ERFINDUNG

Zur Optimierung des Gewichts eines Flugzeugs oder eines anderen Fahrzeugs ist bekannt, die Funktionen mehrerer Bauteile miteinander zu kombinieren und durch ein multifunktionales Bauteil zu ersetzen. Ein Beispiel eines derartigen multifunktionalen Bauteils ist die sogenannte Strukturbatterie, welche einen Lagenaufbau aufweist, der in ein Strukturbauteils aus faserverstärkten Kunststoffen integrierbar ist bzw. ein solches ausbilden kann.

Eine Strukturbatterie kann beispielsweise einen Lagenaufbau aus Kohlefasergewebe aufweisen. Anode und Kathode können dabei durch ein Kohlefasergewerbe realisiert sein, welches in eine Kunststoffmatrix eingebettet ist. Bei der Kathode können die Kohlefasern mit einer Ionen abgebenden Beschichtung versehen sein. Zwischen der Kathode und der Anode ist eine ionendurchlässige Trennschicht zur elektrischen Isolierung vorgesehen. Sowohl an die Kathode als auch an die Anode schließt sich ein Kollektor aus einem metallischen Material an, wobei oftmals Aluminium verwendet wird. Die Strukturbatterie kann durch diesen Aufbau neben ihrer Funktion als Batterie auch eine sehr hohe mechanische Festigkeit aufweisen. Das Integrieren der Strukturbatterie in ein Strukturbauteil eines Flugzeugs oder Fahrzeugs ist demzufolge ohne weiteres möglich.

EP 3 273 505 A1 offenbart ein Strukturbauteil, das eine elektrische Energiequelle ausbildet und gleichzeitig mit Einrichtungen zum Leiten elektrischen Stroms ausgestattet ist.

### ZUSAMMENFASSUNG DER ERFINDUNG

Es ist eine Aufgabe der Erfindung, eine Strukturbatterie oder ein Strukturbauteil vorzuschlagen, welches noch weiter verbesserte Eigenschaften hinsichtlich der Funktion als Batterie als auch ein verringertes Gewicht aufweist.

Die Aufgabe wird gelöst durch ein Strukturbauteil mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Strukturbauteil für ein Fahrzeug vorgeschlagen, aufweisend einen Batterieaufbau mit einem Fest-Elektrolyten-Matrixmaterial, einer darin eingebetteten ersten Schicht Kohlefasern mit einer kathodenaktiven Beschichtung, einer darin eingebetteten zweiten Schicht Kohlefasern ohne kathodenaktive Beschichtung und mindestens einer dazwischen angeordneten elektrisch isolierenden Trennschicht, ferner mit einer ersten Kollektorschicht und einer zweiten Kollektorschicht, welche auf der ersten Schicht bzw. der zweiten Schicht an einer von der Trennschicht abgewandten Seite angeordnet sind, wobei die erste Kollektorschicht und die zweite Kollektorschicht jeweils aus einer flexiblen, formbaren und porösen Schicht von Kohlenstoff-Allotropen ausgebildet sind.

Der besondere Vorteil des erfindungsgemäßen Strukturbauteils liegt darin, dass der als Batterie fungierende Teil des Strukturbauteils ohne weiteres mit einem im Wesentlichen herkömmlichen Verfahren zum Herstellen eines Bauteils aus einem Faserverbundwerkstoff hergestellt werden kann. Die erste Schicht Kohlefasern, die zweite Schicht Kohlefasern, die Trennschicht und beide Kollektorschichten sind flexibel und lassen sich bahnförmig und automatisiert auf eine Werkzeugoberfläche aufbringen. Da zudem die Kohlenstoff-Allotrope eine geringere Dichte als Aluminium aufweisen kann die in dem Strukturbauteil enthaltene oder dadurch realisierte Strukturbatterie ein geringeres Gewicht aufweisen als bekannte Strukturbatterien. Gleichzeitig wird eine deutlich verbesserte Formbarkeit gewährleistet und eine verbesserte mechanische Stabilität.

Die erste Schicht Kohlefasern kann eine oder mehrere Lagen aus Kohlefasern beinhalten. Diese könnten in Form von Geweben bereitgestellt sein und mehrere Faserlagen und Faserrichtungen aufweisen. Die Ausrichtung der Fasern könnte hierbei, wie bei herkömmlichen Strukturbauteilen auch, an geforderte mechanische Eigenschaften angepasst werden. Alternativ dazu könnten auch Lagen aus ungewebten Kohlefasern bzw. Kohlefasergelegen Verwendung finden. Die Kohlefasern könnten dabei eine oder mehrere diskrete Faserrichtungen aufweisen oder omnidirektional zum Erreichen quasiisotroper Eigenschaften realisiert werden. Auch hier können mehrere Lagen mit unterschiedlichen Ausrichtungen aufeinandergelegt werden.

Die kathodenaktive Beschichtung ist bei der Verwendung einer auf Lithium-Ionenbasierenden Batterie ein Lithium-haltiges Übergangsmetalloxid oder ein Lithium-haltiges Übergangsmetallphosphat. Diese Stoffe sind in der Lage, Lithium-Ionen reversibel einzulagern und wieder freizusetzen. Die Beschichtung der Kohlefasern der ersten Schicht kann durch Tränken, Tauchen oder Besprühen mit einer geeigneten Lösung durchgeführt sein, wobei jedoch auch andere Varianten nicht ausgeschlossen sind.

Die zweite Schicht Kohlefasern muss nicht zwangsläufig eine Beschichtung aufweisen, denn Kohlenstoff selbst kann als Aktivmaterial für negative Elektroden Verwendung finden. Es wäre dennoch bei Bedarf möglich, die Kohlefasern mit einem zusätzlichen Anodenaktivmaterial zu beschichten, das etwa Silizium beinhaltet.

Die erste Schicht und die zweite Schicht sind in der Handhabung nicht von anderen Schichten eines Lagenaufbaus zu unterscheiden, der bei herkömmlichen CFK-Bauteilen verwendet wird. Die Trennschicht kann durch unterschiedliche biegeweiche, flächenförmige Materialbahnen realisiert werden, die eine Einbettung in das Matrixmaterial oder eine Anhaftung daran erlauben. Weiter nachfolgend wird auf eine bevorzugte Variante eingegangen.

Die Kollektorschichten können als Kathodenkollektorschicht und als Anodenkollektorschicht bezeichnet werden. Beide dieser Schichten besitzen einen Aufbau aus einem Kohlenstoff-Allotrop, die eine ausreichende Leitfähigkeit besitzen und auf Aluminium basierende Metallbahnen ablösen können. Ein besonderer weiterer Vorteil liegt darin, dass die erste Kollektorschicht und die zweite Kollektorschicht eine deutlich geringere Material-Diskontinuität zu den angrenzenden Kohlefaserschichten aufweisen, als Bahnen aus Aluminium. Dadurch wird eine chemische Korrosionsinkompatibilität von Aluminiumelektroden und Kohlefasern verhindert und die Haltbarkeit verbessert.

In einer bevorzugten Ausführungsform weist mindestens eine der Kollektorschichten Kohlenstoff-Nano-Röhrchen auf, die in das Matrixmaterial eingebettet sind oder ein poröses Gewebe bilden. Die Kohlenstoff-Nano-Röhrchen weisen zudem ein deutlich geringeres Gewicht als eine auf Aluminium basierende Struktur auf. Zudem ist die Strombelastbarkeit einer Struktur aus Kohlenstoff-Nano-Röhrchen um ein Vielfaches höher als von Aluminium oder Kupfer.

Es ist bevorzugt, dass mindestens eine der Kollektorschichten aus einer porösen Matte ungewebter Kohlenstoff-Nano-Röhrchen ausgebildet ist. Die Matte ist besonders dazu geeignet, in einen herkömmlichen Herstellprozess für ein Strukturbauteil aus kohlefaserverstärktem Kunststoff integriert zu werden. Die einzelnen Kohlenstoff-Nano-Röhrchen haften durch die Van-der-Waals-Kräfte zusammen und weisen ein quasiisotropes Zugfestigkeitsverhalten auf. Damit wird ein besonders vorteilhafter Ersatz eines ansonsten metallischen Bahnmaterials erreicht.

Die kathodenaktive Beschichtung kann LiFeO2 aufweisen. Lithium-Eisen-Oxid kann zu einer besseren Speicherkapazität bei gleichzeitig deutlich geringeren Fertigungskosten führen.

Es sind jedoch auch andere Lithium-Metall-Oxid-Verbindungen denkbar, so dass die Erfindung nicht auf Lithium-Eisen-Oxid beschränkt werden muss. Insbesondere könnten Lithium-Kobalt-Oxide eingesetzt werden, die seit langer Zeit im kommerziellen Einsatz sind.

Die Trennschicht kann nichtleitende Fasern, insbesondere Glasfasern, aufweisen. Glasfasern können, wie auch Kohlefasern, aufgrund ihrer Eignung zur Verarbeitung als biegeweiche Gewebe oder Gelege sehr leicht verarbeitet werden und auf gewünschte mechanische Eigenschaften angepasst werden. Da Glasfasern zudem nichtleitend sind, kann es sich empfehlen, eine auf Glasfasern basierende Trennschicht in den Batterieaufbau einzubinden.

Alternativ kann die Trennschicht auch Kohlefasern aufweisen, die eine isolierende Beschichtung besitzen. Die Materialkontinuität wird innerhalb des Batterieaufbaus verbessert und die Stabilität im Vergleich zu Glasfasern leicht gesteigert. Insbesondere in der Position der Trennschicht können folglich Spannungssprünge und Delaminationen besser vermieden werden.

In diesem Zusammenhang sei darauf hingewiesen, dass sämtliche Trennschichten derart ausgeführt sein müssen, dass Ionen, insbesondere Lithium-Ionen von der Kathode abgegeben und von der Anode aufgenommen werden können.

Das Strukturbauteil kann in einer vorteilhaften Ausführungsform ferner mindestens eine zusätzliche Strukturschicht, die den Batterieaufbau zumindest einseitig abdeckt und das Strukturbauteil versteift. Es kann auf lediglich einer Seite oder auf beiden Seiten des Batterieaufbaus eine solche Strukturschicht angeordnet werden. Die zusätzliche Verwendung dieser zusätzlichen Schicht(en) führt zu einer Kapselung des Batterieaufbaus und zu einer weiter erhöhten Festigkeit des Strukturbauteils. Bei Flugzeugen und insbesondere Verkehrsflugzeugen können sich zudem weitere Funktionsschichten anschließen, die für einen Blitzschutz, für Structural Health Monitoring oder ähnliche Anwendungen geeignet sind.

Die Kollektorschichten könnten jeweils mit mindestens einem elektrischen Anschlusskörper ausgestattet sein, wobei sich alle Anschlusskörper zu derselben Seite des Batterieaufbaus erstrecken. Der Batterieaufbau muss zur Nutzung der Batterie auch elektrisch angeschlossen werden, wobei die elektrischen Anschlusskörper dann bevorzugt auf derselben Seite des Batterieaufbaus liegen sollten. Die Anschlusskörper könnten etwa Stifte bzw. Pins sein, die sich von jeweils einer der Kollektorschichten zu der betreffenden Seite des Batterieaufbaus erstrecken.

Die Erfindung betrifft ferner ein Verfahren zum Herstellen eines Strukturbauteils, insbesondere eines vorangehend erläuterten Strukturbauteils. Das Verfahren weist die Schritte des Aufbringens einer ersten Kollektorschicht, einer ersten Schicht Kohlefasern mit einer kathodenaktiven Beschichtung, einer elektrisch isolierenden Trennschicht, einer zweiten Schicht Kohlefasern ohne kathodenaktive Beschichtung und einer zweiten Schicht Kohlefasern sowie das gemeinsame Aushärten auf. In einer bevorzugten Ausführungsform kann das Anordnen mithilfe einer automatisierten Vorrichtung erfolgen. Bevorzugt ist diese mit einem automatisiertem Faserablegekopf oder einem automatisierten Bandablegekopf ausgestattet.

Die Erfindung betrifft ferner ein Fahrzeug mit mindestens einem derartigen Strukturbauteil. Insbesondere ist das Fahrzeug ein Flugzeug.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt einen Batterieaufbau eines Strukturbauteils eines Fahrzeugs in einer schematischen, dreidimensionalen Schnittdarstellung.
Fig. 2 zeigt eine Vorrichtung zur automatisierten Herstellung eines Strukturbauteils.
Fig. 3 zeigt ein Flugzeug dar, welches ein Strukturbauteil mit einem Batterieaufbau beinhaltet.
Fig. 4 zeigt eine schematische, blockbasierte Darstellung eines erfindungsgemäßen Verfahrens zum Herstellen eines Strukturbauteils.

### DETAILLIERTE DARSTELLUNG EXEMPLARISCHER AUSFÜHRUNGSFORMEN

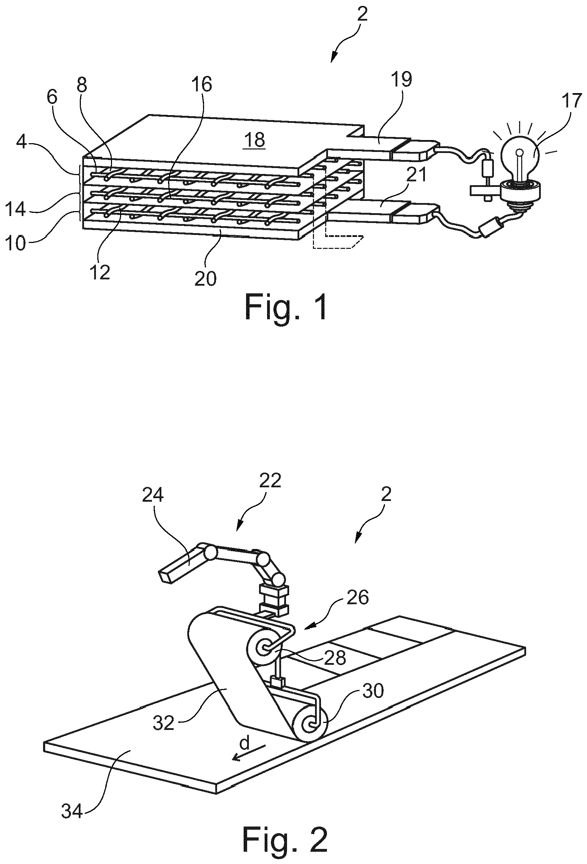

Fig. 1 zeigt einen Batterieaufbau 2 eines Strukturbauteils eines Fahrzeugs. Der Batterieaufbau weist eine erste Schicht 4 aus Kohlefasern 6 mit einer kathodenaktiven Beschichtung auf, wobei die Kohlefasern 6 in ein leitfähiges Matrixmaterial 8 eingebettet sind. Eine zweite Schicht 10 an Kohlefasern 12 ist vorgesehen, bei der die Kohlefasern 12 keine kathodenaktive Beschichtung aufweisen. Die Kohlefasern 12 der zweiten Schicht 10 könnten insgesamt keine Beschichtung aufweisen oder eine Silizium-enthaltende Beschichtung.

Zwischen der ersten Schicht 4 und der zweiten Schicht 10 ist eine elektrisch isolierende Trennschicht 14 angeordnet, die beispielhaft Glasfasern 16 aufweist. Diese ist durchlässig für Lithium-Ionen, welche von der ersten Schicht 4 durch die Trennschicht 14 in die zweite Schicht 10 diffundieren können.

An einer der Trennschicht 14 abgewandten Seite der ersten Schicht 4 ist eine erste Kollektorschicht 18 angeordnet, welche beispielhaft in Form einer ungewebten Matte aus Kohlenstoff-Nano-Röhrchen besteht. Analog dazu ist an einer der Trennschicht 14 abgewandten Seite der zweiten Schicht 10 eine zweite Kollektorschicht 20 angeordnet, welche ebenfalls aus einer Matte ungewebter Kohlenstoff-Nano-Röhrchen bestehen kann. Beide Kollektorschichten 18 und 20 weisen ein besonders geringes Gewicht auf und können üblicherweise bahnförmiges Metall ersetzen.

Zum Anschluss des Batterieaufbaus 2 an einen Verbraucher 17, der hier lediglich beispielhaft angedeutet ist, sind Anschlusskörper 19 und 21 notwendig. Diese werden an den Kollektorschichten 18 und 20 angebracht und stellen einen elektrischen Anschluss bereit. Die Anschlusskörper 19 und 21 könnten auch in Form von isolierten Stiften realisiert sein, die sich in einer Richtung quer zu den einzelnen Schichten des Batterieaufbaus 2 erstrecken. Der Anschlusskörper 19 könnte, wie gestrichelt gezeigt, auch neben den Anschlusskörper 21 auf dieselbe Seite des Batterieaufbaus 2 geführt werden.

Ein besonderer Vorteil dieses Aufbaus liegt darin, dass herkömmliche, automatisierte Verfahren und Vorrichtungen zum Herstellen verwendet werden können. In Fig. 2 wird der Batterieaufbau 2 dargestellt, der über eine automatisierte Vorrichtung 22 hergestellt wird. Die Vorrichtung 22 wird exemplarisch mit einem Roboterarm 24 dargestellt, der exemplarisch einen automatisierten Bandablegekopf 26 trägt. Dieser weist beispielhaft eine Abgabewalze 28 und eine Umlenkwalze 30 auf.

Durch eine Verfahrbewegung in einer Ablagerichtung d wird bahnförmiges Material 32 von der Abgabewalze 28 abgegeben und durch die Umlenkwalze 30 auf das Substrat 34 abgelegt. Selbstverständlich beginnt dieses Verfahren mit dem Ablegen auf einem Formwerkzeug, das unterhalb der untersten Lage liegt. Das bahnförmige Material kann auch auf mehreren Abgabewalzen 28 angeordnet sein, so dass Kathode, Anode, Kollektorschichten, Trennschicht und alle weiteren Schichten ohne Austausch einer Abgabewalze bereitgestellt werden könnten. Es bietet sich insbesondere an, vorimprägnierte Bahnen einzusetzen, bei denen sich bei Bedarf die Faserarten und das Matrixmaterial unterscheiden können. Eine Trennschicht kann etwa durch ein Glasfasergewebe realisiert werden, welches in einer nichtleitenden Matrix eingebettet ist.

Nachdem sämtliche Bahnen abgelegt sind, kann auf gewöhnliche Weise eine Aushärtung vollzogen werden. Hierzu kann das Formwerkzeug in einen Aushärtungsofen gefahren und dort gemäß Anforderungen erwärmt werden.

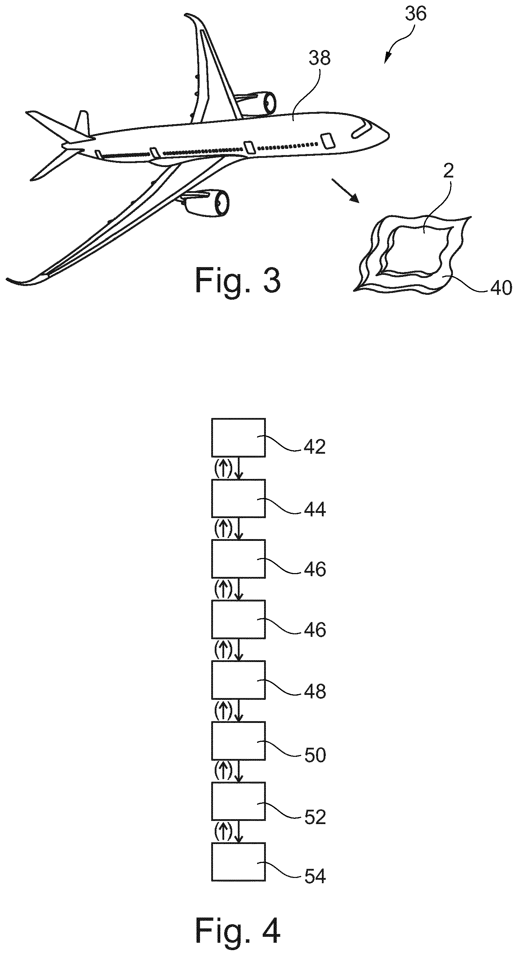

Fig. 3 zeigt ein Flugzeug 36, welches Strukturbauteile 38 besitzt, welche mit einem Batterieaufbau 2 ausgestattet sein könnten. Die Angabe des Bezugszeichens 38 in soll nicht unbedingt auf eine äußere, primäre Flugzeugstruktur hinweisen, sondern kann auch innere Strukturen betreffen. Ein Strukturbauteil 38 wird schematisch in einer etwas vergrößerten Darstellung gezeigt, bei dem eine äußere Schicht 40 mit einem Batterieaufbau 2 versehen ist. Auf die der äußeren Schicht 40 abgewandte Seite des Batterieaufbaus 2 kann ferner eine weitere äußere Schicht aufgebracht werden. Sämtliche äußeren Schichten 40 und der darin angeordnete Batterieaufbau 2 können in einem geschlossenen Verfahren hergestellt werden, sodass schließlich ein monolithisches Bauteil erzeugt wird.

Schließlich zeigt Fig. 4 eine schematische Darstellung eines Ablaufdiagramms des erfindungsgemäßen Verfahrens. Dieses weist die Schritte des Aufbringen 42 einer ersten Kollektorschicht 18 aus einer biegeweichen Schicht von Kohlenstoff-Allotropen, des Aufbringens einer ersten Schicht 4 Kohlefasern mit einer kathodenaktiven Beschichtung, des Aufbringens einer elektrisch isolierenden Trennschicht 14, des Aufbringens einer zweiten Schicht 10 Kohlefasern ohne kathodenaktive Beschichtung, des Aufbringens einer zweiten Kollektorschicht 20 aus einer biegeweichen Schicht von Kohlenstoff-Allotropen, und des gemeinsamen Aushärtens 52. Wie die in Klammern gesetzten Richtungspfeile in Fig. 4 andeuten, kann selbstverständlich das Verfahren auch in anderer Reihenfolge durchlaufen werden. Weiterhin ist es auch möglich, durch Vorfertigung etwa mehrerer Schichten auch mehrere dieser Verfahrensschritte gleichzeitig auszuführen bzw. zu einem Schritt zusammenzufassen.

In einer vorteilhaften Ausführungsform kann das Verfahren zudem das Aufbringen 54 mindestens einer zusätzlichen Strukturschicht 40, die den Batterieaufbau 2 zumindest einseitig abdeckt und das Strukturbauteil 38 versteift, aufweisen.

Ergänzend sei darauf hingewiesen, dass "aufweisend" keine anderen Elemente oder Schritte ausschließt, und "ein" oder "eine" keine Vielzahl ausschließt. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Strukturbauteil (38) für ein Fahrzeug (36), aufweisend: einen Batterieaufbau (2) mit einem Fest-Elektrolyten-Matrixmaterial (8), einer darin eingebetteten ersten Schicht (4) Kohlefasern (6) mit einer kathodenaktiven Beschichtung, einer darin eingebetteten zweiten Schicht (10) Kohlefasern (12) ohne kathodenaktive Beschichtung und mindestens einer dazwischen angeordneten elektrisch isolierenden Trennschicht (14), ferner mit einer ersten Kollektorschicht (18) und einer zweiten Kollektorschicht (20), welche auf der ersten Schicht (4) bzw. der zweiten Schicht (10) an einer von der Trennschicht (14) abgewandten Seite angeordnet sind, wobei die erste Kollektorschicht (18) und die zweite Kollektorschicht (20) jeweils aus einer flexiblen, formbaren und porösen Schicht von Kohlenstoff-Allotropen ausgebildet sind.

2. Strukturbauteil (38) nach Anspruch 1, wobei mindestens eine der Kollektorschichten (18, 20) Kohlenstoff-Nano-Röhrchen aufweist, die in das Matrixmaterial (8) eingebettet sind oder ein Gewebe bilden

3. Strukturbauteil (38) nach Anspruch 2, wobei mindestens eine der Kollektorschichten (18, 20) aus einer porösen Matte ungewebter Kohlenstoff-Nanoröhrchen ausgebildet ist.

4. Strukturbauteil (38) nach einem der vorhergehenden Ansprüche, wobei die kathodenaktive Beschichtung LiFeO₂ aufweist.

5. Strukturbauteil (38) nach einem der vorhergehenden Ansprüche, wobei die Trennschicht (14) nichtleitende Fasern, insbesondere Glasfasern, aufweist.

6. Strukturbauteil (38) nach einem der vorhergehenden Ansprüche, wobei die Trennschicht (14) Kohlefasern aufweist, die eine isolierende Beschichtung besitzen.

7. Strukturbauteil (38) nach einem der vorhergehenden Ansprüche, ferner aufweisend mindestens eine zusätzliche Strukturschicht (40), die den Batterieaufbau (2) zumindest einseitig abdeckt und das Strukturbauteil (38) versteift.

8. Strukturbauteil (38) nach einem der vorhergehenden Ansprüche, wobei die Kollektorschichten (18, 20) jeweils mit mindestens einem elektrischen Anschlusskörper (19, 21) ausgestattet sind, wobei sich alle Anschlusskörper (19, 21) zu derselben Seite des Batterieaufbaus (2) erstrecken.

9. Verfahren zum Herstellen eines Strukturbauteils (38), insbesondere eines Strukturbauteils nach einem der Ansprüche 1 bis 8, mit einem Batterieaufbau, aufweisend die Schritte:
- Aufbringen (42) einer ersten Kollektorschicht (18) aus einer biegeweichen Schicht von Kohlenstoff-Allotropen,
- Aufbringen (44) einer ersten Schicht (4) Kohlefasern mit einer kathodenaktiven Beschichtung,
- Aufbringen (46) einer elektrisch isolierenden Trennschicht (14),
- Aufbringen (48) einer zweiten Schicht (10) Kohlefasern ohne kathodenaktive Beschichtung,
- Aufbringen (50) einer zweiten Kollektorschicht (20) aus einer biegeweichen Schicht von Kohlenstoff-Allotropen, und
- gemeinsames Aushärten (52).

10. Verfahren nach Anspruch 9, wobei das Aufbringen der Kollektorschichten jeweils das Ablegen einer biegeweichen Schicht aus Kohlenstoff-Allotropen aufweist.

11. Verfahren nach Anspruch 9 oder 10, wobei das Aufbringen der Kollektorschichten jeweils das Ablegen einer Matte aus Kohlenstoff-Nano-Röhrchen aufweist.

12. Verfahren nach einem der Ansprüche 9 bis 11, ferner aufweisend den Schritt des Aufbringens mindestens einer zusätzlichen Strukturschicht (40), die den Batterieaufbau (2) zumindest einseitig abdeckt und das Strukturbauteil (38) versteift.

13. Fahrzeug (36), aufweisend mindestens ein Strukturbauteil (38) nach einem der Ansprüche 1 bis 8.

14. Fahrzeug nach Anspruch 13, wobei das Fahrzeug (36) ein Flugzeug (36) ist.
